# EUROPEAN PATENT SPECIFICATION

(11) **EP 1 751 201 B1**
(45) Date of publication and mention of the grant of the patent: **29.10.2008**
(21) Application number: 05733273.6
(22) Date of filing: 31.03.2005
(51) Int. Cl.: C08G 18/08, C08G 18/63, C08G 18/79, C09D 175/06

(54) **OLIGOMER SUITABLE FOR COATING COMPOSITIONS FOR WOOD SUBSTRATES**
OLIGOMER, DAS FÜR BESCHICHTUNGSZUSAMMENSETZUNGEN FÜR HOLZSUBSTRATE GEEIGNET IST
OLIGOMERE CONVENANT A DES COMPOSITIONS DE REVETEMENT POUR DES SUBSTRATS DE BOIS

(30) Priority: 01.04.2004 US 815519
(43) Date of publication of application: 14.02.2007
(73) Proprietor: PPG Industries Ohio, Inc., Cleveland, OH 44111 (US)
(72) Inventor: ZIEGLER, Michael J., Cranberry Township, PA 16066 (US); DEAN, Roy E., Lower Burrell, PA 15068 (US); WILT, Truman F., Clinton, PA 15026 (US)
(74) Representative: Polypatent
(86) International application number: PCT/US2005/011139
(87) International publication number: WO 2005/097859

(56) References cited:
- US-A1- 2003 216 516
- US-B1- 6 586 523

## Description

### FIELD OF THE INVENTION

The present invention is directed to oligomers that may advantageously be used in coating compositions suitable for application substrates, such as wood substrates. The invention also relates to compositions, such as coating compositions, which can be cured by free radical curing.

### BACKGROUND OF THE INVENTION

There are a number of considerations relevant to coatings for wood substrates, such as cabinets, furniture, and the like. For example, the coating compositions should be curable without the need to apply excessive heat; wood substrates cannot be subjected to the high temperatures that can be used to cure coatings on, for example, metal substrates. In addition, it is desirable that the coatings offer sufficient resistance to mar and scratch, while at the same time having an aesthetically pleasing appearance. Finally, as with most coatings, environmental considerations are also relevant. Thus, improved coatings taking into account all of these considerations are desired.

### SUMMARY OF THE INVENTION

The present invention is directed to oligomers comprising a polyol portion, which comprises a polyol modified with a fatty acid, and a free radical curable portion. The oligomers of the present invention are sub stantially free of any ester linkages formed from the reaction of a polyol portion with a compound having more than one functional group. The present invention is also directed to compositions comprising such oligomers and substrates coated with compositions comprising such oligomers.

The coatings of the present invention may advantageously be used on, for example, wood substrates, such as for cabinets, furniture, and the like. The coating compositions of the present invention may be cured without applying excessive heat. In addition, the coatings of the present invention may offer favorable mar and scratch resistance, toughness, solvent resistance, adhesion, and/or appearance relative to, for example, certain vinyl ether/unsaturated polyester coatings.

For purposes of the following detailed description, it is to be understood that the invention may assume various alternative variations and step sequences, except where expressly specified to the contrary. Moreover, other than in any operating examples, or where otherwise indicated, all numbers expressing, for example, quantities of ingredients used in the specification and claims are to be understood as being modified in all instances by the term "about". Accordingly, unless indicated to the contrary, the numerical parameters set forth in the following specification and attached claims are approximations that may vary depending upon the desired properties to be obtained by the present invention. At the very least, and not as an attempt to limit the application of the doctrine of equivalents to the scope of the claims, each numerical parameter should at least be construed in light of the number of reported significant digits and by applying ordinary rounding techniques.

Notwithstanding that the numerical ranges and parameters setting forth the broad scope of the invention are approximations, the numerical values set forth in the specific examples are reported as precisely as possible. Any numerical value, however, inherently contains certain errors necessarily resulting from the standard variation found in their respective testing measurements.

Also, it should be understood that any numerical range recited herein is intended to include all sub-ranges subsumed therein. For example, a range of "1 to 10" is intended to include all sub-ranges between (and including) the recited minimum value of 1 and the recited maximum value of 10, that is, having a minimum value equal to or greater than 1 and a maximum value of equal to or less than 10.

### DETAILED DESCRIPTION OF THE INVENTION

The present invention is directed to oligomers that comprise a polyol portion, which comprises a polyol modified with a fatty acid, and a free radical curable portion, wherein the oligomers are substantially free of any ester linkages formed from the reaction of the polyol portion with a compound having more than one functional group. The present invention is also directed to compositions comprising such oligomers and substrates coating with compositions comprising such oligomers. The compositions of the present invention are often used in liquid form.

As used herein, the phrase "substantially free of any ester linkages formed from the reaction of the polyol portion with a component having more than one functional group" means that the oligomers of the present invention are reacted from the polyol portion and free radical curable portion, outside the presence of any component with more than one functional group that reacts with the polyol portion to introduce an ester linkage onto the oligomer, such as, for example, a polybasic acid or an ester thereof, such as, for example, diethyl malonate. It will be appreciated that the presence of such a component to react with the polyol portion would result alkyd resins of higher molecular weight. Because of the absence of such a component to cause polymerization, the oligomers of the present invention can, therefore, be molecules of relatively limited size and molecular weight. The monofunctionality of the unsaturated fatty acid and the free radical curable portion prevents polymerization, thereby limiting the size and weight of the oligomers of the present invention.

The polyol portion of the oligomers of the present invention comprises a polyfunctional alcohol, *i*.*e*., a polyol. Suitable polyols include, without limitation, polyhydric alcohols having 3 to 6 hydroxyl groups per molecule or, in certain embodiments of the present invention, 3 to 4 hydroxyl groups per molecule. Suitable trihydric alcohols include, without limitation, glycerine, trihydroxyethyl isocyanurate, 1,1,1-trimethylolethane, 1,1,1-trimethylolpropane and 1,2,6-hexanetriol. Suitable tetrahydric alcohols include, without limitation, erythritol, pentaerythritol and alpha-methyl glucoside. Suitable pentahydric and hexahydric alcohols include, without limitation, tetramethylolcyclohexanol, dipentaerythritol, mannitol and sorbitol; polyallyl alcohols; and oxyalkyelene adducts, such as polyethyelene glycols, such as diethyelene glycol and triethyelene glycol.

In the oligomers of the present invention, the polyol portion comprises a polyol modified with a fatty acid. As used herein, modification of the polyol with a fatty acid, such as an unsaturated fatty acid, refers to the reaction of at least one of the hydroxy functional groups of the polyol with the single carboxy group of a fatty acid. This reaction results in an ester functional compound, which is generically referred to herein as the "polyol portion" of the present oligomers.

Examples of fatty acids suitable for use in the present invention include those derived from oils by known processes, including, without limitation, fatty acids having 4 to 22 carbon atoms and characterized by a terminal carboxy group, such as, for example, octanoic acid, decanoic acid, dodecanoic acid, hexadecanoic acid, octadecanoic acid, cis-9-octadecenoic acid, 12-hydroxy-cis-9-octadecenoic acid, cis-9, cis-12-octadecadienoic acid, cis-9, cis-12, cis-15-octadecatrienoic acid, cis-9, trans-11, trans-13-octadecatrienoic acid, 5,8,11,14-docosatetraenoic acid and cis-13-docosanoic acid.

Suitable oils from which fatty acids suitable for use in the oligomers of the present invention are derived include, without limitation, oils selected from one or more drying oils, one or more semi-drying oils, one or more non-drying oils, and mixtures thereof. When one or more drying oils, one or more semi-drying oils or mixtures of drying and semi-drying oils are used, the oligomers will be capable of undergoing oxidative cure. Similarly, if a mixture of at least one of the drying oils or the semi-drying oils with a non-drying oil is used, with the mixture being predominantly drying and/or semi-drying, the oligomers will also undergo oxidative cure. "Predominantly drying" and/or "semi-drying" means that at least about 45 percent of the oils used are drying and/or semi-drying. Both drying and semi-drying oils contain carbon-carbon double bonds that are capable of undergoing oxidative crosslinking, whereas nondrying oils either don't contain such bonds or don't contain a sufficient number of such bonds to effect cure. Examples of drying and semi-drying oils include, without limitation, castor oil, dehydrated castor oil, cottonseed oil, fish oil, linseed oil, menhaden oil, oiticica oil, palm kernel oil, perilla oil, safflower oil, sardine oil, soybean oil, tall oil, and tung oil. Examples of non-drying oils include, without limitation, valeric acid, heptanoic acid, 2-ethyl hexanoic acid, pelargonic acid, isononanoic acid, lauric acid, coconut oil fatty acid, stearic acid and branched fatty acids containing 18 carbon atoms. In certain embodiments of the present invention, the oil or fatty acid used has an iodine value of greater than 100. "Iodine value" refers to the amount of carbon-carbon double bonds and is measured by iodine titration.

The oligomers of the present invention further comprise a free radical curable portion. As used herein, "free radical curable portion" refers to a moiety that can be cured by either cationic cure or free radical cure. In particular, the oligomers of the present inventon are formed by reacting the polyol portion with the free-radical curable portion. To effect this reaction, one or more compounds that join the free-radical curing moiety can be used. Any means for attaching these moieties can be used. For example, compounds containing functionality that will react directly with the hydroxyl group(s) of the polyol can be used when such compounds also contain a free radical curing moiety. Examples of such compounds include, without limitation, isocyanate functional materials, (meth)acrylic acid, and (meth)acrylic esters with free radical curable moieties.

In accordance with certain embodiments of the present invention, an isocyanate-functional ethylenically unsaturated compound is reacted with the polyol portion to form an ungelled urethane modified compound having pendant polymerizable groups. Oligomers of the present invention having urethane linkages can give enhanced performance properties to compositions, such as coating compositions, particularly in the areas of toughness and adhesion. Suitable isocyanates are any known isocyanates that, when reacted with the hydroxyl containing polyol, form an ungelled urethane modified compound having pendant polymerizable ethylenic unsaturation. For example, both urethane-free isocyanate-functional ethylenically unsaturated compounds and isocyanate-functional ethylenically unsaturated compounds having one or more urethane groups can be used to form an ungelled urethane modified compound having pendant polymerizable groups.

Examples of urethane free isocyanate-functional, free radical curable compounds suitable for use in forming the oligomers of the present invention are isocyanatoalkyl (meth)acrylates, including, without limitation, isocyanatoethyl acrylate, isocyanatopropyl acrylate, isocyanatobutyl acrylate, isocyanatoethyl methacrylate, isocyanatopropyl methacrylate and isocyanatobutyl methacrylate; isocyanatoalkyl crotonates including, without limitation, isocyanatobutyl crotonate; and isocyanate-functional monoalkenyl aromatic monomers, including, without limitation, alpha-methylstyrene-*meta-*isopropyl isocyanate and alpha-methylstyrene-para-isopropyl isocyanate. As used herein, (Meth)acrylate and like terms thereof are used conventionally in the art and herein to refer to both acrylate and methacrylate.

Isocyanate-functional ethylenically unsaturated compounds having one or more urethane groups can be prepared by the reaction of isocyanates, such as diisocyanates, with ethylenically unsaturated moieties in appropriate molar amounts to provide a predominance of mono-isocyanate-functional ethylenically unsaturated compounds. Examples of ethylenically unsaturated moieties include ethylenically unsaturated alcohols, such as acrylic functional monohydric alcohols, including, without limitation, (meth)acrylates, particularly hydroxyethyl acrylate, hydroxypropyl acrylate, hydroxybutyl acrylate, hydroxyethyl methacrylate, hydroxypropyl methacrylate and hydroxybutyl methacrylate; hydroxyalkyl crotonates such as hydroxybutyl crotonate; and allyl ethers of polyhydric alcohols such as trimethylolpropane diallyl ether, ethylene glycol monoallyl ether and pentaerythritol triallyl ether. Other ethylenically unsaturated moieties include "electron rich" compounds, for example, vinyl ethers, such as hydroxyalkylvinyl ethers, such as hydroxybutyl and hydroxypropyl-vinyl ethers; and styrene. "Electron rich" compounds are compounds with electron rich carbon-carbon double bonds; an electron rich carbon-carbon double bond is one that is directly adjacent to one or more electron-donating groups, such as oxygen atoms from ether or ester groups, and aromatic rings.

Isocyanates suitable for forming isocyanate-functional ethylenically unsaturated compounds having one or more urethane groups include, without limitation, any known di- or polyisocyanates that, when reacted with the ethylenically unsaturated moiety or moieties, form isocyanate-functional ethylenically unsaturated compounds having a predominance of monoisocyanate functionality; "predominance" means at least about 50 mole percent based on the total number of isocyanate functional groups. In accordance with certain embodiments of the present invention, such isocyanate-functional ethylenically unsaturated compounds have a monoisocyanate functionality of at least about 70 mole percent based on the total number of isocyanate functional groups.

Examples of isocyanates that form an isocyanate-functional ethylenically unsaturated compound having a predominance of monoisocyanate functionality include, without limitation, polyisocyanates and diisocyanates known in the art such as diphenylmethane diisocyanate, 1,6-hexamethylene diisocyanate and 3,5-toluene diisocyanate. Suitable di- and polyisocyanates having differing reactivity caused, for example, by stearic hindrance, include, for example, 2,4-toluene diisocyanate; mixtures of toluene diisocyanates having a majority of the species having differing activity, such as 80 percent 2,4-toluene diisocyanate and 20 percent 2,6-toluene diisocyanate by weight are also suitable as is isophorone diisocyanate. Other polyisocyanates suitable for use in the present invention include, without limitation, diisocyanates, such as 2,6-toluene diisocyanate, 1,3-xylylene diisocyanate, 1 ,4-xylylene diisocyanate, 1,5-naphthalene diisocyanate, *m*-phenylene diisocyanate, *p*-phenylene diisocyanate, 3,3'-dimethyl-4,4'-diphenylmethane diisocyanate, 4,4'-diphenylmethane diisocyanate, 3,3'-dimethylphenylene diisocyanate, 4,4'-biphenylene diisocyanate, 1,6-hexane diisocyanate, isophorone diisocyanate, methylenebis(4-cyclohexyl)isocyanate, 2,2,4-trimethylhexamethylene diisocyanate, bis(2-isocyanate-ethyl) fumarate, 6-isopropyl-1,3-phenyl diisocyanate, 4-diphenylpropane diisocyanate, lysine diisocyanate, hydrogenated diphenylmethane diisocyanate, hydrogenated xylylene diisocyanate, tetramethylxylylene diisocyanate, and 2,5 (or 6)-bis(isocyanatemethyl)-bicyclo[2.2.1]heptane. These diisocyanate compounds can be used either alone or in combination.

The preparation of the isocyanate-functional ethylenically unsaturated compounds having one or more urethane groups can be accomplished by any means known in the art. The temperature at which the reaction takes place depends upon the specific reactants. The reaction of toluene diisocyanate and hydroxyethyl (meth)acrylate, for example, generally takes place from 0°C to 120°C, such as from 20°C to 90°C, or at least about 25°C. The ratio of equivalents of alcohol to equivalents of isocyanate is often between 0.8:2.0 and 1.2:2.0.

The polyol portion and the isocyanate-functional ethylenically unsaturated compound are commonly reacted together below 100°C. The reaction is often carried out at about 65°C, and optionally in the presence of an inhibitor and optionally in the presence of a catalyst. The inhibitor, such as 2,6-ditertiarybutyl-*p*-cresol (commercially available from Shell Oil Co. as IONOL) may be added to retard or prevent addition polymerization. The catalyst is used to promote reaction speed. An example of the catalyst is dibutyltin dilaurate.

An ethylenically unsaturated compound can also be attached to the polyol portion by direct esterification of an ethylenically unsaturated acid, such as acrylic acid, to the polyol portion. The reaction should be carried out above 100°C, with removal of the water of esterification and optionally in the presence of an inhibitor and/or catalyst. The inhibitor, such as 2,6-ditertiarybutyl-p-cresol (commercially available from Shell Oil Co. as IONOL) may be added to retard or prevent addition polymerization, while the catalyst, such as butyl stannoic acid, may be added to promote reaction speed.

It will be appreciated based upon the above description, that the oligomers of the present invention may beprepared by reacting the polyol portion with the free radical curable portion, outside the presence of any component with more than one functional group that reacts with the polyol portion to introduce an ester linkage onto the oligomer. Thus, the oligomers of the present invention are substantially free of such a component and comprise a polyol portion, comprising a polyol modified with an unsaturated fatty acid, and a free radical curable portion. It will also be appreciated, however, that not all compounds produced by the procedures herein will have a free radical curable moiety attached thereto. In fact, there will most certainly be some compounds to which a free radical curable moiety is not attached. In addition, it will be similarly appreciated that not all compounds produced as described herein will have a fatty acid moiety attached thereto. In fact, there will most certainly be some compounds to which a fatty acid moiety is not attached. Nevertheless, the procedures herein will produce at least some, or even a majority, of the oligomers of the present invention.

Thus, the present invention is also directed to compositions comprising the oligomers of the present invention. For example, in accordance with certain particular embodiments of the present invention, such as when the free radical curable portion of the oligomer comprises the reaction product of an isocyanate with an ethylenically unsatured moiety, the composition may comprise a minority of non-isocyanate functional compounds and/or polyisocyanate functional compounds, in addition to the predominance of mono-isocyanate functional ethylenically unsaturated compounds mentioned above. According to certain embodiments of the present invention, compositions comprising a mixture of such compounds may have a Mw of from 500 to 10,000, such as 2,000 to 5,000, a Mn of from 500 to 5,000, such as 1,500 to 3,500, and an Mw/Mn of from 1.0 to 2.0, such as 1.1 to 1.5. "Mw" refers to the weight average molecular weight as determined by size reduction exclusion chromatography relative to linear polystyrene standards; "Mn" is the number average molecular weight as determined by size exclusion chromatography relative to linear polystyrene standards.

In addition, in accordance with certain embodiments of the present invention, such compositions may have a Tg of -50°C to 20°C, such as -30°C to 0°C.

In certain embodiments of the present invention, the pendant free radical curable moieties contain ethylenically unsaturated groups that are attached to the polyol through urethane linkages. It will further be understood that certain of the free radical curable moieties, such as those derived from vinyl ether, could alternatively be cured by cationic cure. Whether free radical cure or cationic cure is actually used with these moieties often depends on the initiator used in the compositions of the present invention, as described below.

The present invention is also directed to compositions, such as coating compositions, comprising one or more of the oligomers described above and an initiator. The initiator is selected based on the type of free radical curable moiety or moieties that are incorporated onto the oligomer(s); in all cases, a free radical cure initiator can be used to cure the free radical moieties and in some embodiments a cationic cure initiator may be alternatively used. If free radical cure is the appropriate or desired cure mechanism, then a free radical initiator is used. Those skilled in the art will understand that free radical cure includes the steps of initiation, propagation, chain transfer and termination. Cure can be initiated by use of actinic light, electron beam or heat, depending on the application requirements; suitable initiators can be selected based upon the particular free radical cure desired and appropriate for the free radical curing moiety or moieties included in the oligomer(s). When radiation cure is desired, the present compositions may comprise at least one photoinitiator. Conventional free radical photoinitiators can be used, including but not limited to benzophenones, acetophenone derivatives, such as alpha-hydroxyalkylphenylketones, benzoins such as benzoin alkyl ethers and benzyl ketals, monoacylphosphine oxides, and bisacylphosphine oxides. Free radical initiators are commercially available from, for example, Ciba Specialty Chemicals Corporation in their DURACURE and IRGACURE lines; IRGACURE 184, IRGACURE 651, and DURACURE 1173 are particularly suitable.

If cationic cure is desired, for those compounds having a free radical curable portion capable of undergoing cationic cure, a cationic cure initiator is used. Examples of cationic in itiators are triaryl sulfonium salts and diaryliodonium salts having non-nucleophilic anions such as hexafluorophosphate, hexafluoroantimonate, tetrafluoroborate and hexafluoroarsenate.

In certain embodiments of the present invention, such as when the present compositions will undergo both free radical cure and oxidative cure, a thermal polymerization initiator can also be added. Examples include peroxides, such as benzoyl peroxide, and azo compounds, such as t-butyl oxybenzoate. It will be appreciated that these compounds also enhance oxidative cure. Thermal initiators are commercially available, for example, from Atofina and DuPont. Other thermal polymerization initiators, including metal oxides, such as manganese dioxide and cobalt octate, may be used.

In certain embodiments of the compositions of the present invention, the amount of the one or more oligomers that is present ranges from about 1 to 99 weight percent, such as about 20 to 50 weight percent, with weight percent being based on the total weight of the composition. In these embodiments, the amount of oligomer(s) that may be present in the composition can range between any combination of the recited values, inclusive of the recited values. It will be understood by those skilled in the art that the amount of oligomer(s) present in the composition is determined by the properties desired to be incorporated into the composition.

In certain embodiments of the compositions of the present invention, the amount of free radical or cationic initiator that is present ranges from about 0.1 to 5.0 weight percent, such as about 0.4 and 1.5 weight percent, with weight percent being based on total weight of the composition. If a thermal initiator is used, in certain embodiments of the compositions of the present invention, the amount of the thermal initiator that is present ranges from about 0.1 to 5.0 weight percent, such as 0.4 to 1.5 weight percent, with weight percent being based on total weight of the composition. In these embodiments, the amount of initiator that may be present in the composition can range between any combination of the recited values, inclusive of the recited values. It will be understood by those skilled in the art that the amount of initiator present in the composition is determined by the properties desired to be incorporated into the composition.

Certain embodiments of the present invention, more specifically those in which the free radical curable moieties have been derived from an "electron rich" compound, may also utilize, in addition to an initiator, an "electron poor" compound. "Electron poor" compounds are compounds with electron poor carbon-carbon double bonds, i.e., a carbon-carbon double bond that is directly adjacent to one or more electron withdrawing groups, such as carbon atoms from carbonyl groups. Examples of suitable electron poor compounds include, without limitation, maleic acid, maleic anhydride, fumaric acid, and itaconic acid.

In certain embodiments of the present invention, the composition further comprises a solvent. Suitable solvents include, without limitation, alkyl acetates, acetone, ketones, mono- and polyalcohols, aromatic hydrocarbons and mixtures thereof. When present, the solvent may, in certain embodiments of the present invention, comprise about 60 to 80 weight percent, with weight percent being based on the total weight of the composition. In these embodiments, the amount of solvent that may be present in the composition can range between any combination of the recited values, inclusive of the recited values. It will be understood by those skilled in the art that the amount of solvent present in the composition is determined by the properties desired to be incorporated into the composition.

In certain embodiments of the present invention, the composition may be substantially free of solvent, *i*.*e*., the composition may be substantially 100 percent solids. Indeed, because the oligomers of the present invention can be of relatively low molecular weight, and of relatively low viscosity, compositions in accordance with certain embodiments of the present invention can be adequately handled and applied to a substrate without the inclusion of solvent in the composition. In certain embodiments of the present invention, wherein the composition is substantially free of solvent, the composition may have a viscosity of about 12,000 up to 20,000 centipoise at 25°C. In other embodiments, wherein the composition includes solvent such that the composition comprises about 30 weight percent solvent, based on the total weight of the composition, the composition may have a viscosity of about 10 up to 500 centipoise at 25°C. Viscosities reported herein are as measured by a Brookfield Spindle viscometer using the procedure outlined by ASTM D2196.

The present compositions, when cured, may have the desirable appearance similar to that achieved when using a composition that only undergoes oxidative cure. Often, when a UV or other free radical cure is employed, a plastic look rather than a natural wood look may be achieved.

It has been discovered that the present compositions, when a drying or semi-drying oil predominates as the fatty acid moiety, provide a single crosslinked network of molecules in which crosslinking occurs in two ways. These compositions, when cured, may show numerous characteristics desirable for coatings, including favorable solvent resistance, mar and scratch resistance, toughness, adhesion and appearance. These improvements are seen, for example, as compared with systems that are wholly oxidative curing, or wholly free radical curing. In addition, when a urethane linkage is introduced, improved properties may also be seen in the area of toughness and adhesion. These characteristics are particularly desirable when applied to wood substrates.

Coatings formed from the present compositions wherein a non-drying oil predominates the fatty acid moiety have less yellowing than other coatings formed from compositions containing drying or semi-drying oils.

The present compositions may also contain other optional ingredients including ultraviolet absorbers, pigments and inhibitors known in the art. In addition, various fillers, plasticizers, flow control agents, surfactants and other known formulating additives may be used. Also useful in the compositions of the invention is an aluminum or titanium chelating crosslinker such as ALUSEC 510 ethyl acetoacetato-di-2-ethoxy ethoxy aluminum manufactured by Manchem Ltd. or TYZOR TPT tetraisopropyl titanate manufactured by DuPont Corporation. An antiskin agent such as methyl ethyl ketoxime may be added to improve package stability. Flatting agents, such as SYLOID 221 from W.R. Grace and TS 100 from Degussa, can also be added, as can additives for slip and mar resistance, such as BYK 301 from Byk Chemie or DC 57 from Dow Chemical, and sag resistance additives such as cellulose acetate butyrate 551-0.2 from Eastman Chemicals.

Various additives that aid in nickel resistance can also be included. "Nickel resistance" refers to the ability of a coating to withstand gouge with a nickel. For example, VAGH, a high molecular weight thermoplastic terpolymer, commercially available from Union Carbide Corporation, can be added, as can various rosin gum esters, commercially available from Akzo Nobel.

The present compositions are suitable as coatings for application to substrates, such as wood substrates. Various woods that can be coated with the present compositions include, for example, oak and maple. These types of woods are used in the preparation of, for example, kitchen cabinets, bath cabinets, tables, desks, dressers, and other furniture.

The coating compositions can be applied to the substrate by any means known in the art. For example, they can be applied by brushing, dipping, flowcoating, oil coating, conventional and electrostatic spraying. Spray techniques are most often used. Dry film thickness for the present coatings can range from, for example, about 0.5 to 3.0 mils per layer. Multiple layers can be applied.

Following application of the compositions of the present invention to a substrate, it may be desired to initiate the free radical or cationic cure. This can be done, for example, by exposing the coated substrate to UV radiation or electron beam radiation.

The oxidative air cure will occur after the free radical or cationic cure. Oxidative cure can be accomplished by allowing the coated substrate to be exposed to ambient or elevated temperature conditions in the presence of oxygen. For example, the ambient or elevated temperature conditions can be those generally considered to be "air dry" or "force dry" conditions. This occurs at temperatures ranging from about 13°C to 250°C, such as 20°C to 150°C, or 50°C to 90°C. Oxidative cure in the absence of accelerating conditions can take place over the course of several days to several weeks.

The present invention is further directed to methods for coating a substrate comprising applying any of the compositions described above and initiating free radical or cationic cure. The method can further comprise the step of allowing oxidative cure to take place, which may or may not involve affirmative steps. That is, the oxidative cure can simply occur on its own, without additional action by the user.

In addition, use of the present compositions allows for increased speed in the coating process. Accordingly, the present invention is further directed to a method for reducing cycle time in coating and curing a wood substrate, comprising applying to the substrate any of the compositions described above. Cycle time is improved, for example, as compared with typical alkyd urea systems currently being used in the art to coat wood substrates. The present compositions are also less toxic than acrylate based UV curable systems that are sometimes used to coat wood substrates.

### EXAMPLES

The following examples are intended to illustrate the invention, and should not be construed as limiting the invention in any way.

### Example 1

This example illustrates the preparation of a vinyl ether functional oligomer.

### Part 1:

A functionalizing agent was prepared using the following procedure. 1367.0 parts by weight of isophorone diisocyanate, 5.9 parts by weight dibutylin dilaurate, 0.5 parts by weight phenothiazine, and 1.6 parts by weight 2,6-di-*tert*-butyl methyl phenol, were dissolved in 685.0 parts by weight methyl isobutyl ketone in a flask equipped with a mechanical stirrer, nitrogen inlet tube, thermometer and a reflux condenser. 712.0 parts by weight of 4-hydroxybutyl vinyl ether was then added to the flask in a drop-wise fashion over three hours. The reaction vessel was not externally heated, but did increase in temperature during the course of the reaction due to the exothermic nature of the alcohol/isocyanate reaction. The highest temperature reached during the reaction was 67°C.

### Part 2:

60 parts by weight of pentaerythritol, 249.7 parts by weight linseed oil, 0.8 parts by weight dibutyl tin oxide, and 315.4 parts by weight aromatic 100^{a} were added to a flask equipped with a mechanical stirrer, nitrogen inlet tube, thermometer and a Dean-Stark trap. The resultant mixture was heated to react in a nitrogen atmosphere. At 180°C, the aromatic 100 solvent began to vigorously reflux and water generated by the esterification process began to be collected. With continuous removal of water, heating continued to 181°C. The reaction was allowed to continue until the oligomer had an acid value of 0.9 mg KOH/gram.

The mixture was then cooled to 50°C and 441.1 parts by weight of the above-described functionalizing agent was added. The resin/functionalizing agent solution was then heated to 100°C, and held at that temperature until infrared spectroscopy indicated that all of the isocyanate groups had been consumed.

The reaction product was then cooled, discharged and analyzed. Analysis of the material by GPC (using linear polystyrene standards) showed the material to have an Mw value of 2798, an Mn value of 2233, and an Mw/Mn value of 1.3. The glass transition temperature was determined by differential scanning calorimetry to be -23°C, and the viscosity at 25°C was found to be 175 centipoise as measured by a spindle viscometer using ASTM D2196.

### Example 2

This example illustrates the preparation of a vinyl ether functional oligomer.

### Part 1:

A functionalizing agent was prepared using the following procedure. 1367.0 parts by weight of isophorone diisocyanate, 5.9 parts by weight dibutylin dilaurate, 0.5 parts by weight phenothiazine, and 1.6 parts by weight 2,6-di-*tert*-butyl methyl phenol, were dissolved in 685.0 parts by weight methyl isobutyl ketone in a flask equipped with a mechanical stirrer, nitrogen inlet tube, thermometer and a reflux condenser. 712.0 parts by weight of 4-hydroxybutyl vinyl ether was then added to the flask in a drop-wise fashion over three hours. The reaction vessel was not externally heated, but did increase in temperature during the course of the reaction due to the exothermic nature of the alcohol/isocyanate reaction. The highest temperature reached during the reaction was 67°C.

### Part 2:

55 parts by weight of pentaerythritol, 114.4 parts by weight linseed oil, 0.7 parts by weight dibutyl tin oxide, and 298.6 parts by weight aromatic 100^{a} were added to a flask equipped with a mechanical stirrer, nitrogen inlet tube, thermometer and a Dean-Stark trap. The resultant mixture was heated to react in a nitrogen atmosphere. At 180°C, the aromatic 100 solvent began to vigorously reflux and water generated by the esterification process began to be collected. With continuous removal of water, heating continued to 181°C. The reaction was allowed to continue until the oligomer had an acid value of 2.0 mg KOH/gram.

The mixture was then cooled to 50°C and 541.6 parts by weight of the above-described functionalizing agent was added. The resin/functionalizing agent solution was then heated to 100°C, and held at that temperature until infrared spectroscopy indicated that all of the isocyanate groups had been consumed.

### Example 3

This example illustrates the preparation of coatings using the oligomers described above. Formulations were prepared using the compositions listed in Table 1. The ingredients were added to a paint can, while being agitated with a Cowles blade. The formulated paints were then further mixed to insure homogeneity.

**Table 1**

| | Parts By Weight | | | |
|---|---|---|---|---|
| Ingredients | Sample 1 | Sample 2 | Sample 3 | Sample 4 |
| Oligomer from Example 1 | 41.4 | | | |
| Oligomer from Example 2 | | 32.1 | | |
| Rapid-Cure DVE-3^{a} | | | 6.5 | 7.5 |
| Unsaturated polyester resin^{b} | 25 | 30.4 | 50 | 50 |
| Irgacure 184^{c} | 0.9 | 0.7 | 0.7 | 0.8 |
| 12% Cobalt CEM-ALL^{d} | 0.6 | 0.1 | | |
| 24% Zirconium HEX-CEM^{e} | 2.8 | 0.18 | | |
| 10% Calcuim GEM-ALL^{f} | 2.8 | 0.4 | | |
| Modaflow^{g} | 0.5 | 0.4 | 0.4 | 0.4 |
| BYK 301^{h} | 0.5 | 0.4 | 0.4 | 0.4 |
| Syloid 221ⁱ | | 1.6 | 1.6 | |
| OK 412^{j} | 1.8 | | | 1.6 |
| n-Butyl acetate | | 23.72 | 21.12 | |
| Isobutyl acetate | | 11.86 | 10.56 | |
| Acetone | 10.7 | | | 9 |
| Methyl isobutyl ketone | | 11.86 | 10.56 | |
| Diacetone alcohol | | 5.93 | 5.28 | |
| Propylene glycol methyl ether acetate | 31.3 | 5.93 | 5.28 | 28.1 |

| | | | | |
|---|---|---|---|---|
| ^{a} triethylene glycol divinyl ether supplied by ISP Technologies, Inc. ^{b} A maleic anhydride containing unsaturated polyester with a carbon-carbon double bond equivalent weight of 672 grams/equivalent ^{c} 1-hydroxycyclohexyl phenyl ketone available from Ciba Specialty Chemicals Corporation ^{d} Cobalt carboxylate available from OMG Americas, Inc. ^{e} Zirconium carboxylate available from OMG Americas, Inc. ^{f} Calcuim carboxylate available from OMG Americas, Inc. ^{g} 2-ethylhexyl acrylate/ethyl acrylate copolymer available from Solutia, Inc. ^{h} Byk 310 is a wetting agent that is available from Byk Chemie. ⁱ Micron sized silica gel available from W.R. Grace and Company ^{j} Wax treated silica compound available from Degussa Corporation | | | | |

Paints were applied to maple veneers, which were previously coated with a conventional oil based stain, at a wet film thickness of 72-96 microns using a Devilbiss JGA-502 hand held spray gun equipped with a number 30 cap and using 30-40 PSI of air to achieve the desired film thickness. Wet film thickness were verified using a Paul N. Garder Company Inc. wet film thickness guage.

The coated veneers were given a 5-minute ambient temperature flash, followed by a 15-minute 140° F bake. The veneers were then allowed to cool at ambient temperature for 1-minute, followed by exposure to 600 mj/cm² of UV exposure, then allowed to cool at ambient temperature for an additional 4 minutes.

The cured veneers were then sanded with 280 grit sand-paper prior to application of a second coat of the formulation sample. The second coat was applied in the same manner as the first coat, with the exception of UV exposure, which was increased to 800 mj/cm² during the cure of the second coat.

After the application and UV curing of the second coat, the veneers were allowed to rest at either room temperature for 1 week or 120° F for 24 hours to insure cross linking via oxidative drying oil cure. After this oxidative cure the veneers were subjectively rated nickel scrape resistance, tested for cross hatch tape using method ASTM D3359, and rated for appearance of the clear coat. The results of these tests are shown below in Table 2.

**Table 2**

| Coating | Nickel Scrape ^{a} | Tape Adhesion ^{b} | Appearance |
|---|---|---|---|
| Sample 1 | 1.5 | 3B | Clear |
| Sample 2 | 1.5 | 2B | Clear |
| Sample 3 | 1.5 | 0B | Slight Haze |
| Sample 4 | 1.0 | 0B | Slight Haze |

| | | | |
|---|---|---|---|
| ^{a} Scale from 1 (worst) to 10 (best) ^{b} 5B = 100% adhesion 4B = 99%-95% adhesion 3B = 85%-94% adhesion 2B = 65%-84% adhesion 1 B = 35%-64% adhesion 0B = 0%-34% adhesion | | | |

Coatings formed from the compositions of the present invention, which comprise oligomers that are substantially free of any ester linkages formed from a component having more than one functional group and which comprise a polyol portion comprising a polyol modified with an unsaturated fatty acid and a free radical curable portion can exhibit favorable adhesion, appearance, and toughness properties.

## Claims

1. An oligomer comprising:
(a) a polyol portion comprising a polyol modified with a fatty acid wherein the polyol has 3 to 6 hydroxyl functional groups per molecule prior to modification with the fatty acid, and
(b) a free radical curable portion,
wherein the oligomer is substantially free of any ester linkages formed from the reaction of the polyol portion with a compound having more than one functional group.

2. The oligomer of claim 1, wherein the fatty acid comprises a fatty acid moiety derived from one or more drying oils; semi-drying oils; nondrying oils; or mixtures thereof.

3. The oligomer of claim 2, wherein the fatty acid moiety is derived predominantly from drying oils, semi-drying oils, or mixtures thereof.

4. The oligomer of claim 2, wherein the fatty acid moiety is derived predominantly from nondrying oils.

5. The oligomer of claim 3, wherein the drying oil is linseed oil.

6. The oligomer of claim 3, wherein the semi-drying oil is soya.

7. The oligomer of claim 4, wherein the nondrying oil is coconut oil.

8. The oligomer of claim 1, wherein the free radical curable portion contains polymerizable ethylenically unsaturated groups.

9. The oligomer of claim 8, wherein the polymerizable ethylenically unsaturated groups are acrylate groups, vinyl ether groups or are derived from a compound containing an electron rich carbon-carbon double bond.

10. The oligomer of claim 8, wherein the free radical curable portion comprises a compound selected from the group consisting of isocyanatoalkyl (meth)acrylates, isocyanatoalkyl crotonates, and isocyanate-functional monoalkenyl aromatic monomers.

11. The oligomer of claim 8, wherein the free radical curable portion comprises the reaction product of an isocyanate with an ethylenically unsaturated moiety.

12. The oligomer of claim 11, wherein the reaction product of an isocyanate with an ethylenically unsaturated moiety has a monoisocyanate functionality of at least about 70 percent.

13. A composition comprising the oligomer of any of claims 1-12.

14. The composition of claim 13, wherein the composition has a Mw of 500 to 10,000.

15. The composition of claim 13, wherein the composition has a Mn of 500 to 5000.

16. The composition of claim 13, wherein the composition has a Mw/Mn of 1.0 to 2.0, preferably 1.1 to 1.5.

17. The composition of claim 13 further comprising an initiator.

18. The composition of claim 17, wherein the initiator is a free radical cure initiator.

19. The composition of claim 17, wherein the initiator is a cationic cure initiator.

20. The composition of claim 17, wherein the oligomer is present in an amount of 20 to 50 weight percent, with weight percent being based on the total weight of the composition.

21. The composition of claim 17, wherein the initiator is present in an amount of 0.1 to 5.0 weight percent, with weight percent being based on the total weight of the composition.

22. The composition of claim 17 further comprising a solvent.

23. The composition of claim 22, wherein the solvent is selected from the group consisting of alkyl acetates, acetone, ketones, monoalcohols, polyalcohols, aromatic hydrocarbons, and mixtures thereof.

24. The composition of claim 22, wherein the solvent is present in an amount of 60 to 80 weight percent, with weight percent being based on the total weight of the composition.

25. The composition of claim 17, wherein the composition is substantially free of solvent.

26. A wooden substrate coated with the composition of claim 17.

27. The substrate of claim 26, wherein the wood is selected from the group consisting of oak and maple.

28. The substrate of claim 26, wherein the substrate is a cabinet or furniture.

29. The composition of claim 17, further comprising one or more compounds that impart nickel scratch resistance to the compound.

30. A method for coating a substrate comprising:
a) applying the composition of claim 17 to the substrate; and
b) initiating cure of the free radical curable portion.

31. The method of claim 30, wherein said method further comprises
c) allowing the composition to oxidatively cure.

32. A method for reducing cycle time in the coating of a substrate comprising wood, comprising applying to the substrate the composition of claim 17 and initiating cure of the free radical curable portion.

## Patentansprüche

1. Oligomer, enthaltend:
(a) einen Polyolanteil, der ein Polyol, das mit einer Fettsäure modifiziert ist, enthält, wobei das Polyol 3 bis 6 hydroxylfunktionelle Gruppen pro Molekül vor der Modifikation mit der Fettsäure aufweist, und
(b) einen radikalisch härtbaren Anteil,
wobei das Oligomer im Wesentlichen frei von jeglichen Esterverknüpfungen, die durch die Reaktion des Polyolanteils mit einer Verbindung mit mehr als einer funktionellen Gruppe gebildet wurden, ist.

2. Oligomer nach Anspruch 1, wobei die Fettsäure eine Fettsäureeinheit umfasst, die sich von einem oder mehreren trocknenden Ölen, halbtrocknenden Ölen, nichttrocknenden Ölen oder Mischungen davon ableitet.

3. Oligomer nach Anspruch 2, wobei die Fettsäureeinheit sich im Wesentlichen von trocknenden Ölen, halbtrocknenden Ölen oder Mischungen davon ableitet.

4. Oligomer nach Anspruch 2, wobei die Fettsäureeinheit sich im Wesentlichen von nichttrocknenden Ölen ableitet.

5. Oligomer nach Anspruch 3, wobei das trocknende Öl Leinöl ist.

6. Oligomer nach Anspruch 3, wobei das halbtrocknende Öl Sojaöl ist.

7. Oligomer nach Anspruch 4, wobei das nichttrocknende Öl Kokosnussöl ist.

8. Oligomer nach Anspruch 1, wobei der radikalisch härtbare Anteil polymerisierbare ethylenisch ungesättigte Gruppen enthält.

9. Oligomer nach Anspruch 8, wobei die polymerisierbaren ethylenisch ungesättigten Gruppen Acrylatgruppen, Vinylethergruppen sind oder sich von einer Verbindung ableiten, die eine elektronenreiche Kohlenstoff-Kohlenstoff-Doppelbindung enthält.

10. Oligomer nach Anspruch 8, wobei der radikalisch härtbare Anteil eine Verbindung, ausgewählt aus der Gruppe bestehend aus Isocyanatoalkyl-(meth)acrylaten, Isocyanatoalkylcrotonaten und isocyanatfunktionellen aromatischen Monoalkenylmonomeren, umfasst.

11. Oligomer nach Anspruch 8, wobei der radikalisch härtbare Anteil das Reaktionsprodukt eines Isocyanats mit einer ethylenisch ungesättigten Einheit umfasst.

12. Oligomer nach Anspruch 11, wobei das Reaktionsprodukt eines Isocyanats mit einer ethylenisch ungesättigten Einheit eine Monoisocyanatfunktionalität von wenigstens etwa 70% aufweist.

13. Zusammensetzung, enthaltend das Oligomer nach einem der Ansprüche 1-12.

14. Zusammensetzung nach Anspruch 13, wobei die Zusammensetzung ein Mw von 500 bis 10.000 aufweist.

15. Zusammensetzung nach Anspruch 13, wobei die Zusammensetzung ein Mn von 500 bis 5.000 aufweist.

16. Zusammensetzung nach Anspruch 13, wobei die Zusammensetzung ein Mw/Mn von 1,0 bis 2,0, vorzugsweise 1,1 bis 1,5, aufweist.

17. Zusammensetzung nach Anspruch 13, die zusätzlich einen Initiator enthält.

18. Zusammensetzung nach Anspruch 17, wobei der Initiator ein Radikalhärtungsinitiator ist.

19. Zusammensetzung nach Anspruch 17, wobei der Initiator ein kationischer Härtungsinitiator ist.

20. Zusammensetzung nach Anspruch 17, wobei das Oligomer in einer Menge von 20 bis 50 Gew.-% vorhanden ist, wobei die Gewichtsprozente sich auf das Gesamtgewicht der Zusammensetzung beziehen.

21. Zusammensetzung nach Anspruch 17, wobei der Initiator in einer Menge von 0,1 bis 5 Gew.-% vorhanden ist, wobei die Gewichtsprozente sich auf das Gesamtgewicht der Zusammensetzung beziehen.

22. Zusammensetzung nach Anspruch 17, die zusätzlich ein Lösungsmittel enthält.

23. Zusammensetzung nach Anspruch 22, wobei das Lösungsmittel ausgewählt ist aus der Gruppe bestehend aus Alkylacetaten, Aceton, Ketonen, Monoalkoholen, Polyalkoholen, aromatischen Kohlenwasserstoffen und Mischungen davon.

24. Zusammensetzung nach Anspruch 22, wobei das Lösungsmittel in einer Menge von 60 bis 80 Gew.-% vorhanden ist, wobei die Gewichtsprozente sich auf das Gesamtgewicht der Zusammensetzung beziehen.

25. Zusammensetzung nach Anspruch 17, wobei die Zusammensetzung im Wesentlichen frei von Lösungsmittel ist.

26. Holzsubstrat, das mit der Zusammensetzung nach Anspruch 17 beschichtet ist.

27. Substrat nach Anspruch 26, wobei das Holz ausgewählt ist aus der Gruppe bestehend aus Eiche und Ahorn.

28. Substrat nach Anspruch 26, wobei das Substrat ein Wandschrank oder ein Möbelstück ist.

29. Zusammensetzung nach Anspruch 17, die zusätzlich eine oder mehrere Verbindungen enthält, die der Verbindung Nickelkratzfestigkeit verleihen.

30. Verfahren zur Beschichtung eines Substrats, umfassend:
a) Aufbringen der Zusammensetzung nach Anspruch 17 auf das Substrat und
b) Initiierten der Härtung des radikalisch härtbaren Anteils.

31. Verfahren nach Anspruch 30, wobei das Verfahren zusätzlich
c) oxidatives Härtenlassen der Zusammensetzung umfasst.

32. Verfahren zur Reduzierung der Zykluszeit bei der Beschichtung eines Substrats, das Holz enthält, umfassend Aufbringen der Zusammensetzung nach Anspruch 17 auf das Substrat und Initiieren der Härtung des radikalisch härtbaren Anteils.

## Revendications

1. Oligomère comprenant :
(a) une partie de polyol comprenant un polyol modifié par un acide gras, dans laquelle le polyol comporte 3 à 6 groupes fonctionnels hydroxyle par molécule avant la modification par l'acide gras, et
(b) une partie durcissable radicalaire,
dans lequel l'oligomère est sensiblement exempt de liaisons ester formées à partir de la réaction de la partie de polyol avec un composé comportant plus d'un groupe fonctionnel.

2. Oligomère suivant la revendication 1, dans lequel l'acide gras comprend un fragment d'acide gras provenant d'une ou plusieurs huiles siccatives, huiles semi-siccatives, huiles non siccatives ou leurs mélanges.

3. Oligomère suivant la revendication 2, dans lequel le fragment d'acide gras provient essentiellement d'huiles siccatives, d'huiles semi-siccatives ou de leurs mélanges.

4. Oligomère suivant la revendication 2, dans lequel le fragment d'acide gras provient essentiellement d'huiles non siccatives.

5. Oligomère suivant la revendication 3, dans lequel l'huile siccative est de l'huile de lin.

6. Oligomère suivant la revendication 3, dans lequel l'huile semi-siccative est du soja.

7. Oligomère suivant la revendication 4, dans lequel l'huile non siccative est de l'huile de coco.

8. Oligomère suivant la revendication 1, dans lequel la partie durcissable radicalaire contient des groupes éthyléniquement insaturés polymérisables.

9. Oligomère suivant la revendication 8, dans lequel les groupes éthyléniquement insaturés polymérisables sont des groupes acrylate, des groupes éther vinylique ou proviennent d'un composé contenant une double liaison carbone-carbone riche en électrons.

10. Oligomère suivant la revendication 8, dans lequel la partie durcissable radicalaire comprend un composé choisi dans le groupe comprenant les (méth)acrylates d'isocyanatoalkyle, les crotonates d'isocyanatoalkyle et les monomères monoalcényl aromatiques à fonction isocyanate.

11. Oligomère suivant la revendication 8, dans lequel la partie durcissable radicalaire comprend le produit de réaction d'un isocyanate avec un fragment éthyléniquement insaturé.

12. Oligomère suivant la revendication 11, dans lequel le produit de réaction d'un isocyanate avec un fragment éthyléniquement insaturé comporte une fonctionnalité monoisocyanate d'au moins environ 70%.

13. Composition comprenant l'oligomère suivant l'une quelconque des revendications 1 à 12.

14. Composition suivant la revendication 13, dans laquelle la composition a un Mw de 500 à 10 000.

15. Composition suivant la revendication 13, dans laquelle la composition a un Mw de 500 à 5 000.

16. Composition suivant la revendication 13, dans laquelle la composition a un Mw/Mn de 1,0 à 2,0, avantageusement de 1,1 à 1,5.

17. Composition suivant la revendication 13, comprenant de plus un initiateur.

18. Composition suivant la revendication 17, dans laquelle l'initiateur est un initiateur de durcissement radicalaire.

19. Composition suivant la revendication 17, dans laquelle l'initiateur est un initiateur de durcissement cationique.

20. Composition suivant la revendication 17, dans laquelle l'oligomère est présent en une quantité de 20 à 50 % en poids, les % en poids étant pris par rapport au poids total de la composition.

21. Composition suivant la revendication 17, dans laquelle l'initiateur est présent en une quantité de 0,1 à 5,0 % en poids, les % en poids étant pris par rapport au poids total de la composition.

22. Composition suivant la revendication 17, comprenant de plus un solvant.

23. Composition suivant la revendication 22, dans laquelle le solvant est choisi dans le groupe comprenant les acétates d'alkyle, l'acétone, les cétones, les monoalcools, les alcools polyvalents, les hydrocarbures aromatiques et leurs mélanges.

24. Composition suivant la revendication 22, dans laquelle le solvant est présent en une quantité de 60 à 80 % en poids, les % en poids étant pris par rapport au poids total de la composition.

25. Composition suivant la revendication 17, dans laquelle la composition est sensiblement exempte de solvant.

26. Substrat de bois revêtu de la composition de la revendication 17.

27. Substrat suivant la revendication 26, dans lequel le bois est choisi dans le groupe comprenant l'érable et le chêne.

28. Substrat suivant la revendication 26, dans lequel le substrat est une armoire ou de l'ameublement.

29. Composition suivant la revendication 17, comprenant de plus un ou plusieurs composés qui confèrent une résistance à la rayure au nickel au composé.

30. Procédé de revêtement d'un substrat comprenant :
a) l'application de la composition de la revendication 17 au substrat; et
b) l'initiation du durcissement de la partie durcissable radicalaire.

31. Procédé suivant la revendication 30, dans lequel ledit procédé comprend de plus :
c) le durcissement oxydatif de la composition.

32. Procédé de réduction du temps de cycle lors du revêtement d'un substrat comprenant du bois, comprenant l'application au substrat de la composition de la revendication 17 et l'initiation du durcissement de la partie durcissable radicalaire.
